# EUROPEAN PATENT SPECIFICATION

(11) **EP 4 206 095 B1**
(45) Date of publication and mention of the grant of the patent: **31.12.2025**
(21) Application number: 21874264.1
(22) Date of filing: 16.09.2021
(51) Int. Cl.: B65G 1/04, B65G 1/137, G06Q 10/08, F16P 3/14

(54) **METHOD FOR CONTROLLING A WAREHOUSING SYSTEM**
VERFAHREN ZUR STEUERUNG EINES LAGERHALTUNGSSYSTEMS
PROCÉDÉ DE CONTRÒLE D'UN SYSTÈME D'ENTREPOSAGE

(30) Priority: 30.09.2020 CN 202011059499
(43) Date of publication of application: 05.07.2023
(73) Proprietor: Hai Robotics Co., Ltd., Shenzhen, Guangdong 518000 (CN)
(72) Inventor: PENG, Yifan, Shenzhen, Guangdong 518000 (CN)
(74) Representative: Nederlandsch Octrooibureau
(86) International application number: PCT/CN2021/118867
(87) International publication number: WO 2022/068603

(56) References cited:
- WO-A1-2021/115864
- WO-A1-2022/212017
- CN-A- 108 453 790
- CN-A- 110 936 407
- CN-A- 110 936 407
- CN-A- 112 224 728
- CN-U- 207 737 918
- JP-A- 2010 156 153

## Description

### TECHNICAL FIELD

The present invention relates to the field of warehousing system technologies, and in particular, to a method for controlling a warehousing system.

### BACKGROUND

With the rapid development of the logistics industry, in the warehousing system field, an automated warehousing system is increasingly widely applied, many manually carried warehousing operating lines are replaced by automatic robots. In a modem warehousing system, full automation, high efficiency, and high density become development objectives of warehousing automation. A warehousing system generally includes shelving units and at least one goods-carrying tool, and in order to meet a requirement for carrying goods of the goods-carrying tool, sufficient space generally needs to be reserved between the shelving units, for the goods-carrying tool to carry goods to a shelving unit or take out goods from a shelving unit.

In the related art, when a user needs to enter the warehousing system for inspection or performing other items, all goods-carrying tools in the warehousing system are generally stopped, where the goods-carrying tool may be a robot or a forklift, to prevent a moving goods-carrying tool from causing damage to the user, thereby ensuring the safety of the user.

However, in the related art, when the user enters the warehousing system, all the goods-carrying tools are stopped, which brings a relatively low warehousing efficiency. In addition, the goods-carrying tool is frequently started and stopped repeatedly, as a result, a hardware loss may be caused to the goods-carrying tool.

Chinese patent application CN110936407 recites an industrial robot area safety protection method. The industrial robot area safety protection method includes the steps that a movement area of a manipulator of an industrial robot is divided into a plurality of sub-areas according to a movement range corresponding to tasks performed by the manipulator of the industrial robot, and the sub-areas are numbered; a safety door in each sub-area is associated with the corresponding sub-area number; the number of the corresponding sub-area where the manipulator of the industrial robot performs the current task is obtained; the number of the sub-area corresponding to an opened safety door is obtained; the number of the sub-area corresponding to the opened safety door is matched with the number of the corresponding sub-area where the manipulator of the industrial robot performs the current task; if matching is successful, the manipulator of the industrial robot stops operating; and otherwise, the manipulator of the industrial robot continues to operate. The intelligent degree is improved, and the work efficiency of the industrial robot is improved.

### SUMMARY

The invention is set out in the appended set of claims. The present disclosure provides a method and apparatus for controlling a warehousing system, a guard door, and a warehousing system. Therefore, when a user enters the warehousing system, the safety of the user is ensured, the warehousing efficiency is improved, and a hardware loss caused to a goods-carrying tool due to repeated starting and stopping is reduced.

According to the invention, a method for controlling a warehousing system is provided, wherein the method includes:
- obtaining data representing a door-opening-request signal of a first guard door acquired by a face recognition device, a fingerprint recognition device, a keyword inputting device, or an opening a control button, and determining a first target region corresponding to the first guard door, the first target region being at least one region in a plurality of regions of the warehousing system, the first guard door corresponding to a plurality of target regions, the plurality of target regions have a plurality of guard doors, with first the guard door corresponding to the first target region and a second target region and a second guard door corresponding to the first target region and the second target region; the second target region is one of the plurality of target regions;
- determining a state of a first goods-carrying tool in the first target region is a non-operating state,

or dispatching the first goods-carrying tool to another region other than the first target region in the warehousing system;
   - controlling a state of the first guard door to be an open state;
   - obtaining data representing location information of a user acquired by a radio frequency identification device, an ultra-wideband identification device, a two-dimensional code recognition device, or an image recognition device, and determining a target region corresponding to the location information as a second target region,
   - determining that a state of a goods-carrying tool in the second target region corresponding to the location information is a non-operating state; and
   - determining the first target region as a non-target region wherein a state of a good carrying tool in said non-target region is an operating state;
wherein the second target region is different from the first target region;
wherein the obtaining data representing location information of a user acquired by a radio frequency identification device, an ultra-wideband identification device, a two-dimensional code recognition device, or an image recognition device comprises:
   - identifying by the radio frequency identification device, the ultra-wideband identification device, the two-dimensional code recognition device, or the image recognition device a tag of the user, wherein the tag has a positioning identification function; and
   - parsing the tag to obtain the location information of the user.

In the embodiments of the present disclosure, when a door-opening-request signal of a guard door is obtained, a target region corresponding to the guard door is determined and a state of a goods-carrying tool in the target region is determined to be a non-operating state, and the guard door is then opened, thereby ensuring the safety of the target region where a user enters. In addition, the state of the goods-carrying tool in the target region corresponding to the guard door is controlled to be a non-operating state and a goods-carrying tool in a non-target region is kept to operate normally, and therefore, when compared with the related art of stopping all goods-carrying tools, the warehousing efficiency is improved and a hardware loss caused to the goods-carrying tool due to repeated starting and stopping is reduced.

According to a preferred embodiment of the invention, according to the method for controlling a warehousing system provided in this embodiment of the present disclosure, the determining that a state of a first goods-carrying tool in the target region is a non-operating state includes:
sending, if the first goods-carrying tool exists, an operation-stop instruction to the first goods-carrying tool, to cause the first goods-carrying tool to stop operation; and
detecting the state of the first goods-carrying tool, to determine that the state of the first goods-carrying tool is a non-operating state.

In this embodiment of the present disclosure, when a goods-carrying tool exists in the target region, a control instruction is sent to the goods-carrying tool in the target region to cause the goods-carrying tool to stop operation, and the state of the first goods-carrying tool is detected to determine that the state of the first goods-carrying tool is a non-operating state, thereby further ensuring the safety of the target region.

According to a preferred embodiment of the invention, after the detecting the state of the first goods-carrying tool, the method further includes:
pushing first prompt information when the state of the first goods-carrying tool is an operating state, where the first prompt information is configured to prompt a user that the target region is a non-safe region.

In this embodiment of the present disclosure, when a goods-carrying tool in an operating state exists in the target region, the user is prompted that the target region is a non-safe region, so that the user may be prompted to perform safety check on the goods-carrying tool, thereby further ensuring the safety of the user.

According to a preferred embodiment of the invention, before the determining that a state of a first goods-carrying tool in the target region is a non-operating state, the method includes:
determining whether the first goods-carrying tool exists in the first target region; and
controlling the state of the first guard door to be an open state when determining that there is no first goods-carrying tool in the first target region.

In this embodiment of the present disclosure, whether a goods-carrying tool exists in the target region is determined, so that when no goods-carrying tool exists in the target region, the state of the guard door may be controlled to be an open state, thereby avoiding control over the goods-carrying tool.

According to the invention, after the determining a target region corresponding to the guard door, the method further includes:
dispatching the first goods-carrying tool to another region other than the target region in the warehousing system.

In this embodiment of the present disclosure, after the target region is determined, a goods-carrying tool in the target region is dispatched to a non-target region, so that the utilization of the goods-carrying tool is improved, and the warehousing efficiency is further improved.

According to the invention, the dispatching the first goods-carrying tool to another region other than the target region in the warehousing system includes:
stopping a first task of the first goods-carrying tool, a target shelving unit of the first task is in the target region, and/or controlling the first goods-carrying tool to execute a second task, a target shelving unit of the second task is in another region other than the target region in the warehousing system.

According to the invention, the method for controlling a warehousing system provided in this embodiment of the present disclosure further includes:
controlling to forbid a second goods-carrying tool in the warehousing system from entering the target region, where the second goods-carrying tool is a goods-carrying tool in another region other than the target region.

According to a preferred embodiment of the invention, the controlling to forbid a second goods-carrying tool in the warehousing system from entering the target region includes:
stopping a first task of the second goods-carrying tool; and/or stopping distributing the first task to the second goods-carrying tool, where a target shelving unit of the first task is in the target region.

A goods-carrying tool in a non-target region is controlled to be forbidden from entering the target region, thereby further ensuring the safety of the target region.

According to the invention, the guard door corresponds to a plurality of target regions, and after the determining a target region corresponding to the guard door, the method further includes:
obtaining location information of the user to determine a target region corresponding to the location information; and
the determining that a state of a goods-carrying tool in the target region is a non-operating state includes:
   determining that a state of a goods-carrying tool in the target region corresponding to the location information is a non-operating state.

In this embodiment of the present disclosure, when the guard door corresponds to a plurality of target regions, the safety of the target region in which the user is located is ensured.

According to the invention, the obtaining location information of the user includes:
detecting a tag of the user, where the tag has a positioning identification function; and
parsing the tag to obtain the location information of the user.

According to a preferred embodiment of the invention, after the determining that a state of a goods-carrying tool in the target region is a non-operating state, the method further includes:
displaying a safety identifier in the target region, where the safety identifier is configured to indicate that the target region is a safe region.

In a possible implementation, the safety identifier is a ground identifier.

In a possible implementation, the method for controlling a warehousing system provided in this embodiment of the present disclosure further includes:
sending second prompt information to the user, where the second prompt information is configured to prompt the user that the target region is a safe region.

According to a preferred embodiment of the invention, the method for controlling a warehousing system provided in this embodiment of the present disclosure further includes:
restoring the state of the first goods-carrying tool to an operating state if the state of the guard door is determined as a closed state and/or no user is in the target region.

According to a preferred embodiment of the invention, the restoring the state of the first goods-carrying tool to an operating state includes:
starting a first task of the first goods-carrying tool, and/or distributing the first task to the first goods-carrying tool, where a target shelving unit of the first task is in the target region.

In a possible implementation, the first goods-carrying tool is a robot or a forklift.

The following describes an apparatus, a guard door, a warehousing system, a computer-readable storage medium, and a computer program product provided in the embodiments of the present disclosure, and for content and effects thereof, reference may be made to the method for controlling a warehousing system provided in the embodiments of the present disclosure, which are not described herein again.

According to a second aspect, an embodiment of the present disclosure provides an apparatus for controlling a warehousing system, including:
an obtaining module, configured to obtain a door-opening-request signal of a guard door, and determine a target region corresponding to the guard door, the target region being a partial region in a plurality of regions of the warehousing system; a determining module, configured to determine that a state of a first goods-carrying tool in the target region is a non-operating state; and a control module, configured to control a state of the guard door to be an open state.

In a possible implementation, the apparatus includes:
a judgment module, configured to determine whether the first goods-carrying tool exists.

In a possible implementation, according to the apparatus for controlling a warehousing system provided in this embodiment of the present disclosure, the determining module is further configured to:
send an operation-stop instruction to the first goods-carrying tool, to cause the first goods-carrying tool to stop operation; and detect the state of the first goods-carrying tool, to determine that the state of the first goods-carrying tool is a non-operating state.

In a possible implementation, the apparatus for controlling a warehousing system provided in this embodiment of the present disclosure further includes:
a pushing module, configured to push first prompt information if the state of the first goods-carrying tool is an operating state, where the first prompt information is configured to prompt a user that the target region is a non-safe region.

In a possible implementation, the control module is further configured to:
dispatch the first goods-carrying tool to another region other than the target region in the warehousing system.

In a possible implementation, the control module is specifically configured to:
stop a first task of the first goods-carrying tool, a target shelving unit of the first task is in the target region, and/or control the first goods-carrying tool to execute a second task, a target shelving unit of the second task is in another region other than the target region in the warehousing system.

In a possible implementation, according to the apparatus for controlling a warehousing system provided in this embodiment of the present disclosure, the control module is further configured to:
control to forbid a second goods-carrying tool in the warehousing system from entering the target region, where the second goods-carrying tool is a goods-carrying tool in another region other than the target region.

In a possible implementation, the control module is specifically configured to:
stop a first task of the second goods-carrying tool; and/or stop distributing the first task to the second goods-carrying tool, where a target shelving unit of the first task is in the target region.

In a possible implementation, the obtaining module is further configured to obtain location information of the user to determine a target region corresponding to the location information; and
the determining module is specifically configured to determine that a state of a goods-carrying tool in the target region corresponding to the location information is a non-operating state.

In a possible implementation, the obtaining module is specifically configured to:
detect a tag of the user, where the tag has a positioning identification function; and parse the tag to obtain the location information of the user.

In a possible implementation, the apparatus for controlling a warehousing system provided in this embodiment of the present disclosure further includes:
a display module, configured to display a safety identifier in the target region, where the safety identifier is configured to indicate that the target region is a safe region.

In a possible implementation, the safety identifier is a ground identifier.

In a possible implementation, the apparatus for controlling a warehousing system provided in this embodiment of the present disclosure further includes:
a transmission module, configured to send second prompt information to the user, where the second prompt information is configured to prompt the user that the target region is a safe region.

In a possible implementation, according to the apparatus for controlling a warehousing system provided in this embodiment of the present disclosure, the control module is further configured to:
restore the state of the first goods-carrying tool to an operating state if the state of the guard door is determined as a closed state and/or no user is in the target region.

In a possible implementation, the control module is specifically configured to:
start a first task of the first goods-carrying tool, and/or distribute the first task to the first goods-carrying tool, where a target shelving unit of the first task is in the target region.

In a possible implementation, the first goods-carrying tool is a robot or a forklift.

According to a third aspect, an embodiment of the present disclosure provides a guard door, including:
at least one processor, and
a memory communicatively connected to the at least one processor, where
the memory stores instructions executable by the at least one processor, and the instructions, when executed by the at least one processor, are configured to perform the method according to the first aspect or the implementations of the first aspect.

According to a fourth aspect, an embodiment of the present disclosure provides a warehousing system, including the guard door provided in the third aspect and a goods-carrying tool.

According to a fifth aspect, an embodiment of the present disclosure provides a non-transitory computer-readable storage medium storing computer instructions, and the computer instructions are executable by a computer, wherein the computer instructions, when being executed by the computer, are configured to perform the method according to the first aspect or the implementations of the first aspect.

According to a sixth aspect, an embodiment of the present disclosure provides a computer program product, including executable instructions, the executable instructions being configured to implement the method according to the first aspect or the implementations of the first aspect.

According to the method and apparatus for controlling a warehousing system, the guard door, and the warehousing system provided in the present disclosure, a door-opening-request signal of a guard door is obtained, and a target region corresponding to the guard door is determined; a state of a first goods-carrying tool in the target region is then determined as a non-operating state; and a state of the guard door is finally controlled to be an open state. In the embodiments of the present disclosure, when a door-opening-request signal of a guard door is obtained, a target region corresponding to the guard door is determined and a state of a goods-carrying tool in the target region is determined to be a non-operating state, and the guard door is then opened, thereby ensuring the safety of the target region where a user enters. In addition, the state of the goods-carrying tool in the target region corresponding to the guard door is controlled to be a non-operating state and a goods-carrying tool in a non-target region is kept to operate normally, and therefore, when compared with the related art of stopping all goods-carrying tools, the warehousing efficiency is improved and a hardware loss caused to the goods-carrying tool due to repeated starting and stopping is reduced.

### BRIEF DESCRIPTION OF THE DRAWINGS

To describe the technical solutions in the embodiments of the present application or in the prior art more clearly, the following briefly introduces the accompanying drawings required for describing the embodiments or the prior art. Apparently, the accompanying drawings in the following description show some embodiments of the present application, and a person of ordinary skill in the art may still derive other drawings from these accompanying drawings without creative efforts.
FIG. 1 is an architecture diagram of an exemplary application scenario according to an embodiment of the present disclosure;
FIG. 2 is a schematic flowchart of a method for controlling a warehousing system according to an embodiment of the present disclosure;
FIG. 3 is a schematic flowchart of a method for controlling a warehousing system according to another embodiment of the present disclosure;
FIG. 4 is a schematic flowchart of a method for controlling a warehousing system according to still another embodiment of the present disclosure;
FIG. 5 is a schematic flowchart of a method for controlling a warehousing system according to yet another embodiment of the present disclosure;
FIG. 6 is a schematic structural diagram of a warehousing system according to an embodiment of the present disclosure;
FIG. 7 is a schematic flowchart of a method for controlling a warehousing system according to yet another embodiment of the present disclosure;
FIG. 8 is a schematic structural diagram of a target region according to an embodiment of the present disclosure;
FIG. 9 is a schematic structural diagram of an apparatus for controlling a warehousing system according to an embodiment of the present disclosure; and
FIG. 10 is a schematic structural diagram of an electronic device according to an embodiment of the present disclosure.

### DETAILED DESCRIPTION

In order to make the objectives, technical solutions, and advantages of the embodiments of the present disclosure clearer, the technical solutions in the embodiments of the present disclosure will be clearly and completely described with reference to the accompanying drawings in the embodiments of the present disclosure. Apparently, the described embodiments are a part of the embodiments of the present disclosure, but not all the embodiments. Based on the embodiments in the present disclosure, all other embodiments obtained by a person of ordinary skill in the art without creative efforts all fall within the protection scope of the present disclosure.

In the specification, claims, and accompanying drawings of the present disclosure, the terms "first", "second", "third", "fourth", and so on (if existing) are intended to distinguish between similar objects rather than describe a specific order or sequence. It should be understood that the data used in such a way are interchangeable in proper circumstances, so that the embodiments of the present disclosure described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

With the rapid development of the logistics industry, in the warehousing system field, shelving units and at least one goods-carrying tool are generally included. In the related art, when a user needs to enter a warehousing system for inspection or performing other items, all goods-carrying tools in the warehousing system are generally stopped, where the goods-carrying tool may be a robot or a forklift, to prevent a moving goods-carrying tool from causing damage to the user, thereby ensuring the safety of the user. However, in the related art, when the user enters the warehousing system, all the goods-carrying tools are stopped, which brings a relatively low warehousing efficiency. In addition, the goods-carrying tool is frequently started and stopped repeatedly, as a result, a hardware loss may be caused to the goods-carrying tool.

An inventive concept of a method and apparatus for controlling a warehousing system, a guard door, and a warehousing system provided in the embodiments of the present disclosure, a warehousing region of the warehousing system is divided into a plurality of regions, each region has a corresponding guard door, when a door-opening-request signal of a guard door is obtained, a target region corresponding to the guard door is determined, and a state of a goods-carrying tool in the target region is controlled to be a non-operating state, thereby ensuring the safety of the target region. In addition, the state of the goods-carrying tool in the target region is controlled to be a non-operating state and a goods-carrying tool in a non-target region is kept to operate normally, and therefore, when compared with the related art of stopping all goods-carrying tools, the warehousing efficiency is improved and a hardware loss caused to the goods-carrying tool due to repeated starting and stopping is reduced.

The following describes exemplary application scenarios of the embodiments of the present disclosure.

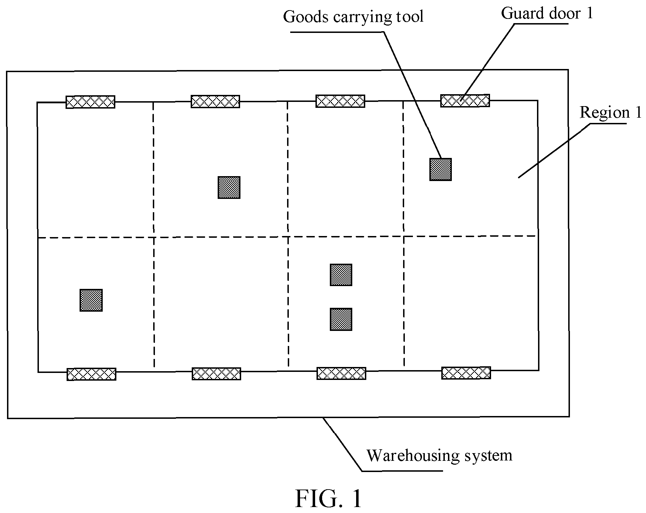

The method for controlling a warehousing system provided in the embodiments of the present disclosure may be executed by the apparatus for controlling a warehousing system provided in the embodiments of the present disclosure. The apparatus for controlling a warehousing system provided in the embodiments of the present disclosure may be integrated on a terminal device or the apparatus for controlling a warehousing system may be a terminal device, and a specific type of the terminal is not limited in the embodiments of the present disclosure. For example, the terminal device may be a guard door, a goods-carrying tool, a smartphone, a personal computer, a tablet computer, a wearable device, an on-board terminal, a surveillance device, a camera, or the like. FIG. 1 is an architecture diagram of an exemplary application scenario according to an embodiment of the present disclosure, and the embodiments of the present disclosure may be applicable to a warehousing system. The warehousing system may include one or more warehousing regions, and each warehousing region may include a plurality of regions. As shown in FIG. 1, the warehousing system includes a warehousing area, the warehousing area includes 8 regions, and each region has a corresponding guard door. For example, a region 1 corresponds to a guard door 1, and a user may directly enter the region 1 through the guard door 1. Goods-carrying tools move in the regions to implement storage and delivery of goods, and in different time periods, the number of goods-carrying tools in each region is not fixed, for example, may be zero or may be one or more goods-carrying tools. A guardrail or a virtual wall may exist between regions to distinguish different regions. The embodiments of the present disclosure only use this application scenario as an example and are not limited thereto.

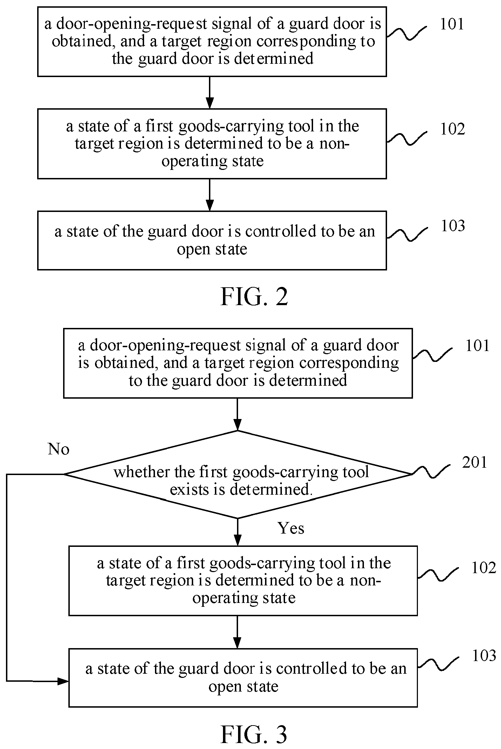

FIG. 2 is a schematic flowchart of a method for controlling a warehousing system according to an embodiment of the present disclosure, the method may be executed by an apparatus for controlling a warehousing system, and the apparatus may be implemented through software and/or hardware. The following describes the method for controlling a warehousing system by using a terminal device as an execution entity. As shown in FIG. 2, the method for controlling a warehousing system according to this embodiment of the present disclosure may include the following operations:
In block S101: a door-opening-request signal of a guard door is obtained, and a target region corresponding to the guard door is determined.

A control manner of the guard door is not limited in the embodiments of the present disclosure. For example, the user may request to open the guard door through face recognition, fingerprint recognition, inputting a keyword, or opening a control button. After a user operation is received, the guard door generates a door-opening-request signal. Information carried in the door-opening-request signal is not limited in the embodiments of the present disclosure, and for example, the door-opening-request signal may carry an identifier of the guard door or a user identifier. After the door-opening-request signal of the guard door is obtained, a target region corresponding to the guard door is determined. There is a correspondence between guard doors and regions of a warehousing region. In a possible implementation, an association list between guard doors and regions may be established, and the target region corresponding to the guard door may be determined by querying the association list, where the target region is a partial region in a plurality of regions of the warehousing system. The embodiments of the present disclosure only use this manner as an example and are not limited thereto.

In block S102: a state of a first goods-carrying tool in the target region is determined to be a non-operating state.

The first goods-carrying tool is a goods-carrying tool in the target region. The non-operating state of the first goods-carrying tool may include a turn-off state or a standby state. In the non-operating state, the first goods-carrying tool cannot move or perform a goods delivery/storage action, thereby preventing movement of the first goods-carrying tool from colliding with and hurting the user.

According to the invention, to determine the state of the first goods-carrying tool, the first goods-carrying tool in the target region may be first determined, and the state of the first goods-carrying tool is then detected. If the state of the first goods-carrying tool is an operating state, the state of the first goods-carrying tool is controlled to be a non-operating state, to ensure that the state of the first goods-carrying tool in the target region is the non-operating state.

According to a preferred embodiment of the invention, the determining that a state of a first goods-carrying tool in the target region is a non-operating state includes:
sending, if the first goods-carrying tool exists, an operation-stop instruction to the first goods-carrying tool, to cause the first goods-carrying tool to stop operation; and detecting the state of the first goods-carrying tool, to determine that the state of the first goods-carrying tool is the non-operating state.

The terminal device may perform data communication with the first goods-carrying tool, and a specific implementation of the data communication performed between the terminal and the first goods-carrying tool is not limited in the embodiments of the present disclosure. The terminal device may send an operation-stop instruction to the first goods-carrying tool, to cause the first goods-carrying tool to stop operation. The operation-stop instruction may be configured to instruct the first goods-carrying tool to stop operation, or instruct the first goods-carrying tool to enter a standby state, or instruct the first goods-carrying tool to turn off a power supply, which is not limited in the embodiments of the present disclosure.

In this embodiment of the present disclosure, when a goods-carrying tool exists in the target region, a control instruction is transmitted to the goods-carrying tool in the target region to cause the goods-carrying tool to stop operation, and the state of the first goods-carrying tool is detected to determine that the state of the first goods-carrying tool is the non-operating state, thereby further ensuring the safety of the target region.

According to a preferred embodiment of the invention, after the detecting the state of the first goods-carrying tool, the method further includes:
pushing first prompt information if the state of the first goods-carrying tool is an operating state, where the first prompt information is configured to prompt a user that the target region is a non-safe region.

After the state of the first goods-carrying tool is detected, the state of the first goods-carrying tool may be an operating state. In this case, due to failure of the first goods-carrying tool, the terminal device cannot perform data communication with the first goods-carrying tool, or the first goods-carrying tool cannot perform an operation notification instruction transmitted by the terminal device, the state of the first goods-carrying tool is an operating state.

In this embodiment of the present disclosure, when there is a goods-carrying tool in an operating state in the target region, the user is prompted that the target region is a non-safe region by pushing the first prompt information, so that the user may be prompted to perform safety check on the goods-carrying tool, thereby further ensuring the safety of the user. A specific implementation for pushing the first prompt information is not limited in the embodiments of the present disclosure. In a possible implementation, prompt information may be pushed through the terminal device, to cause an interface of the terminal device to display the prompt information. In another possible implementation, the first prompt information may be also pushed to a communication address of an administrator of the warehousing system through the terminal device, for example, the first prompt information is pushed to a device such as a mobile phone or a computer of the administrator of the warehousing system. The embodiments of the present disclosure only use this manner as an example and are not limited thereto.

In block S103: a state of the guard door is controlled to be an open state.

After determining that the state of the first goods-carrying tool in the target region is a non-operating state, the state of the guard door is controlled to be an open state. For example, a control signal may be transmitted to the guard door, and the control signal is configured to instruct to open the guard door, which is not limited in the embodiments of the present disclosure.

When the state of the guard door is controlled to be an open state, the user enters the target region through the guard door, to perform inspection or another operation in the target region. After the user completes a task, the user leaves the target region through the guard door and closes the guard door. Based on the foregoing scenario, according to a preferred embodiment of the invention, the method for controlling a warehousing system provided in this embodiment of the present disclosure further includes:
restoring the state of the first goods-carrying tool to an operating state if the state of the guard door is determined as a closed state and/or no user is in the target region.

A manner for determining the state of the guard door and a manner for determining whether a user is in the target region are not limited in the embodiments of the present disclosure. For example, the state of the guard door may be determined by detecting the state information of the guard door. In another example, an infrared detection apparatus may be arranged at a location of the guard door, and when the number of users entering the guard door and the number of users exiting the guard door are consistent, it is determined that no user is in the target region. The embodiments of the present disclosure only use the manner as an example.

After determining that the state of the guard door is a closed state, or determining that no user is in the target region, or determining that the state of the guard door is a closed state and no user is in the target region, the state of the first goods-carrying tool is restored to the operating state. The restoring the state of the first goods-carrying tool to the operating state may include controlling the first goods-carrying tool to keep operating or controlling the first goods-carrying tool to be started. According to a preferred embodiment of the invention, the restoring the state of the first goods-carrying tool to an operating state includes: starting a first task of the first goods-carrying tool, and/or distributing the first task to the first goods-carrying tool, where a target shelving unit of the first task is in the target region.

The first task of the first goods-carrying tool is started to cause the first goods-carrying tool to execute the first task in the target region. Alternatively, the first task may be also distributed to the first goods-carrying tool to cause the first goods-carrying tool to execute the first task in the target region, where a goods-carrying tool may store and deliver goods in the target region.

In the embodiments of the present disclosure, when a door-opening-request signal of a guard door is obtained, a target region corresponding to the guard door is determined and a state of a goods-carrying tool in the target region is determined to be a non-operating state, and the guard door is then opened, thereby ensuring the safety of the target region where a user enters. In addition, the state of the goods-carrying tool in the target region corresponding to the guard door is controlled to be a non-operating state and a goods-carrying tool in a non-target region is kept to operate normally, and therefore, when compared with the related art of stopping all goods-carrying tools, the warehousing efficiency is improved and a hardware loss caused to the goods-carrying tool due to repeated starting and stopping is reduced.

Based on the foregoing embodiments, in an operation process, the goods-carrying tool may move in different regions of the warehousing system, so that when the user needs to enter a region, no goods-carrying tool may exist in the region. Based on this, according to the invention, FIG. 3 is a schematic flowchart of a method for controlling a warehousing system according to another embodiment of the present disclosure. As shown in FIG. 3, in the method for controlling a warehousing system provided in this embodiment of the present disclosure, before S102 of determining that a state of a first goods-carrying tool in the target region is a non-operating state, the method further includes the following operations:
In block S201: whether the first goods-carrying tool exists is determined.

If the first goods-carrying tool does not exist, operation in the block S103 of controlling a state of the guard door to be an open state is performed, and if the first goods-carrying tool exists, operation in the block S102 and block S103 are performed.

To determine whether a goods-carrying tool exists in the target region, location information of goods-carrying tools in a warehousing space may be obtained, and whether a goods-carrying tool exists in the target region among the goods-carrying tools is then determined by using the location information of the goods-carrying tools. If there is a goods-carrying tool in the target region, it is determined that the first goods-carrying tool exists; and if there is no goods-carrying tool in the target region, it is determined that the first goods-carrying tool does not exist. The embodiments of the present disclosure only use this manner as an example and are not limited thereto.

In this embodiment of the present disclosure, whether there is a goods-carrying tool in the target region is determined, so that when no goods-carrying tool exists in the target region, the state of the guard door is controlled to be an open state, thereby avoiding further control over the goods-carrying tool.

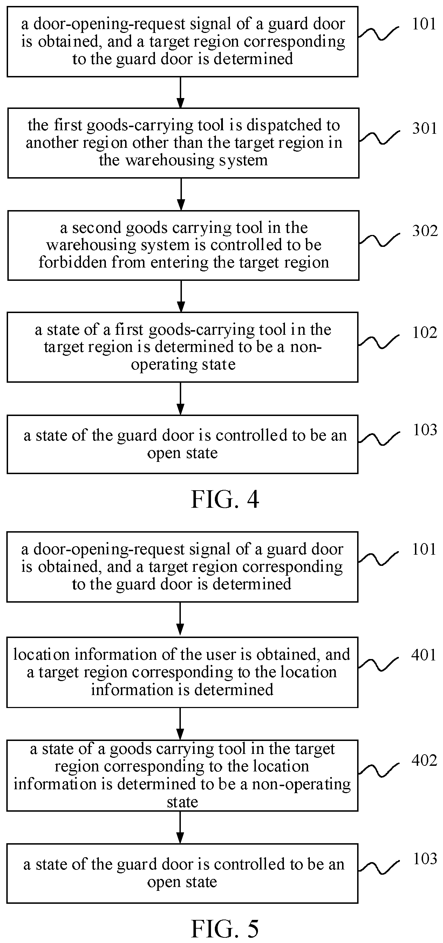

Based on the embodiments shown in FIG. 2 and FIG. 3, according to the invention, FIG. 4 is a schematic flowchart of a method for controlling a warehousing system according to another embodiment of the present disclosure. As shown in FIG. 4, in the method for controlling a warehousing system provided in this embodiment of the present disclosure, after the operation in block S101 of determining a target region corresponding to the guard door, the method further includes the following operations:
In block S301: the first goods-carrying tool is dispatched to another region other than the target region in the warehousing system.

If the states of the first goods-carrying tools in the target region are all set to a non-operating state, the goods storage and delivery efficiency of the warehousing system may be affected. To further improve the utilization of the first goods-carrying tool and improve the goods storage and delivery efficiency of the warehousing system, the first goods-carrying tool may be dispatched to another region other than the target region in the warehousing system, namely, a non-target region. A specific implementation of dispatching the first goods-carrying tool to a non-target region is not limited in the embodiments of the present disclosure. For example, the first goods-carrying tool may be controlled to move to a non-target region.

According to the invention, the dispatching the first goods-carrying tool to another region other than the target region in the warehousing system includes:
stopping a first task of the first goods-carrying tool, a target shelving unit of the first task is in the target region, and/or controlling the first goods-carrying tool to execute a second task, a target shelving unit of the second task is in another region other than the target region in the warehousing system.

The first goods-carrying tool may need to execute a plurality of tasks, where the plurality of tasks may include one or more first tasks and one or more second tasks. According to the invention, by stopping the first task of the first goods-carrying tool, the first goods-carrying tool may execute the second task according to a task sequence. Since the target shelving unit of the second task is in a non-target region, in order to execute the second task, the first goods-carrying tool may move to the non-target region. In another possible implementation, by directly controlling the first goods-carrying tool to execute the second task, the first goods-carrying tool moves to the non-target region, thereby dispatching the first goods-carrying tool to the non-target region.

In this embodiment of the present disclosure, after the target region is determined, a goods-carrying tool in the target region is dispatched to a non-target region, so that the utilization of the goods-carrying tool is improved, and the warehousing efficiency is further improved.

Based on the embodiment shown in FIG. 4, further, according to the invention, as shown in FIG. 4, the method for controlling a warehousing system provided in this embodiment of the present disclosure may further include the following operations:
In block S302: a second goods-carrying tool in the warehousing system is controlled to be forbidden from entering the target region.

The second goods-carrying tool is a goods-carrying tool in another region other than the target region. An execution sequence of operation in block S302 is not limited between operation in block S301 in FIG. 4 and operation in block S102, and for example, may be executed after operation in block S101, executed after operation in block S102, or executed after operation in block S103, and the execution sequence shown in FIG. 4 is only used as an example for description in the embodiments of the present disclosure.

To further ensure the safety of the target region, in addition to dispatching the first goods-carrying tool in the target region to a non-target region or setting the state of the first goods-carrying tool to a non-operating state, a second goods-carrying tool in the non-target region may be also controlled to move in the non-target region. A specific implementation of controlling to forbid the second goods-carrying tool in the warehousing system from entering the target region is not limited in the embodiments of the present disclosure. For example, the second goods-carrying tool may be prevented from moving to the target region by setting a boundary between the target region and the non-target region to be non-crossing. In a possible implementation, the controlling to forbid a second goods-carrying tool in the warehousing system from entering the target region includes:
stopping a first task of the second goods-carrying tool; and/or stopping distributing the first task to the second goods-carrying tool, where a target shelving unit of the first task is in the target region.

The second goods-carrying tool may need to execute a plurality of tasks, where the plurality of tasks may include one or more first tasks and one or more second tasks. In a possible implementation, by stopping the first task of the second goods-carrying tool, the second goods-carrying tool may execute the second task according to a task sequence. Since the target shelving unit of the second task is in the non-target region, in order to execute the second task, the second goods-carrying tool may move to the non-target region. In another possible implementation, by stopping distributing the first task to the second goods-carrying tool, the second goods-carrying tool is controlled to perform goods storage and delivery in the non-target region. The embodiments of the present disclosure only use this manner as an example and are not limited thereto.

In this embodiment of the present disclosure, a goods-carrying tool in a non-target region is controlled to be forbidden from entering the target region, thereby further ensuring the safety of the target region.

Based on the embodiments shown in any one of FIG. 2 to FIG. 4, according to the invention, the guard door corresponds to a plurality of target regions, and FIG. 5 is a schematic flowchart of a method for controlling a warehousing system according to yet another embodiment of the present disclosure. As shown in FIG. 5, in the method for controlling a warehousing system provided in this embodiment of the present disclosure, after operation in block S101 of determining a target region corresponding to the guard door, the method may further include the following operations:
In block S401: location information of the user is obtained, and a target region corresponding to the location information is determined.

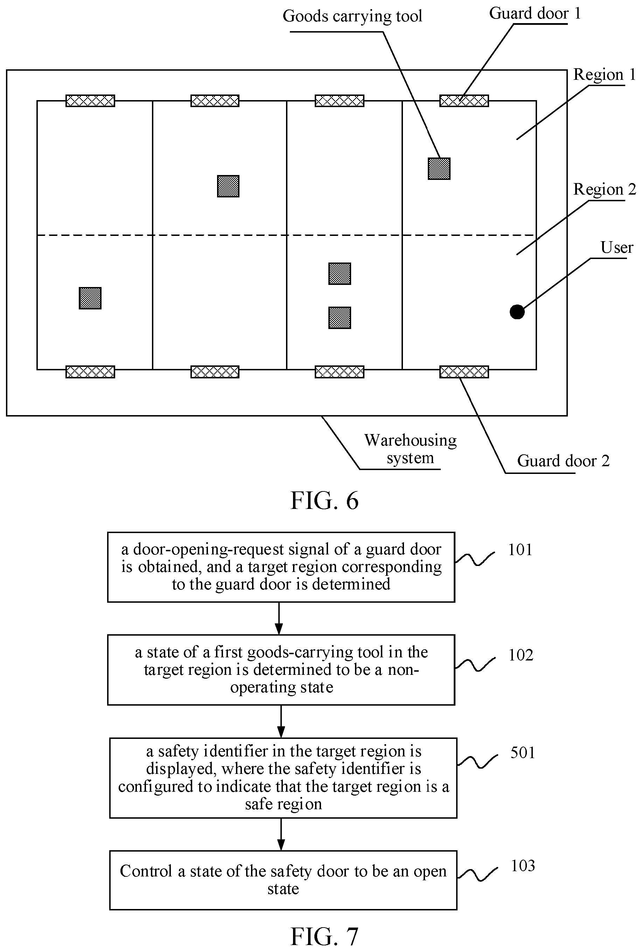

For ease of description, FIG. 6 is a schematic structural diagram of a warehousing system according to an embodiment of the present disclosure. As shown in FIG. 6, a warehousing area in the warehousing system includes a plurality of regions, where a guard door 1 corresponds a region 1, a guard door 2 corresponds to a region 2, and the regions may be isolated by a virtual wall. For example, the region 1 and the region 2 are isolated by a virtual wall (a dashed-line part), but the user may move between the region 1 and the region 2, for example, the user may enter the region 1 or the region 2 through the guard door 1 or the guard door 2.

In the application scenario shown in FIG. 6, the target region in which the user is located may be determined by detecting the location information of the user. A specific implementation of obtaining the location information of the user is not limited in the embodiments of the present disclosure. According to the invention, the obtaining location information of the user includes: detecting a tag of the user, where the tag has a positioning identification function; and parsing the tag to obtain the location information of the user.

When the user enters a guard door, the user may carry a tag by wearing a badge, a ribbon, or a sticker with the tag or wearing a vest or hat with the tag, which is not limited in the embodiments of the present disclosure. A specific type of the tag is not limited in the embodiments of the present disclosure. For example, the tag may be identified through radio frequency identification (RFID), ultra wideband (UWB) identification, two-dimensional code recognition, or image recognition, to determine the location information of the user.

In this embodiment of the present disclosure, the tag of the user is detected or parsed to determine the location information of the user, so that the accuracy of the location information of the user may be improved, and the tag of the user is detected and identified, so that the efficiency of obtaining the location information of the user may be further improved. In addition, compared with the related art of determining the location information of the user through infrared detection, costs for obtaining the location information of the user may be further reduced. In addition, each user may be distinguished by using a different tag, so that detecting tags of users is further conducive to subsequent management of the users.

As shown in FIG. 6, it is determined that the region in which the user is located is the region 2 through detection.

The corresponding operation in block S 102 of determining that a state of a goods-carrying tool in the target region is a non-operating state may be implemented by performing operation in block S402.

In block S402: a state of a goods-carrying tool in the target region corresponding to the location information is determined to be a non-operating state.

After determining that the region in which the user is located is the region 2, the region 2 is determined as a target region, and a state of a goods-carrying tool in the region 2 is determined as a non-operating state. A manner for controlling the goods-carrying tool in the target region corresponding to the location information is not limited in the embodiments of the present disclosure, and for details, reference may be made to the manner for controlling the first goods-carrying tool in the target region in the foregoing embodiments, which is not described herein again in the embodiments of the present disclosure.

A region, for example, the region 1 in FIG. 6 other than the target region in which the user is located in the plurality of target regions may be used as a non-target region for processing, and for details, reference may be made to the control manner in a non-target region in the foregoing embodiments, which is not described herein again in the embodiments of the present disclosure.

According to the invention, when the guard door corresponds to a plurality of target regions, the plurality of target regions may have a plurality of guard doors. As shown in FIG. 6, the guard door 1 corresponds to the region 1 and the region 2, and the guard door 2 also corresponds to the region 1 and the region 2. If the user enters the region 1 or the region 2 through the guard door 1, the location information of the user may be detected to determine to close the guard door away from the user, and the guard door closest to the user may be also opened for the user to walk out the region. For example, a current location of the user is in the region 2, so that the guard door 1 is closed and the guard door 2 is opened. Alternatively, a user request is received to open a guard door that the user requests to open, which is not limited in the embodiments of the present disclosure.

In this embodiment of the present disclosure, when the guard door corresponds to a plurality of target regions, not only the safety of the target region in which the user is located is ensured, but also the flexibility of the goods-carrying tool and the operating efficiency of the goods-carrying tool may be further improved.

Based on any one of the foregoing embodiments, according to the invention, FIG. 7 is a schematic flowchart of a method for controlling a warehousing system according to yet another embodiment of the present disclosure. As shown in FIG. 7, in the method for controlling a warehousing system provided in this embodiment of the present disclosure, after operation in block S102 of determining that a state of a goods-carrying tool in the target region is a non-operating state, the method may further include:
In block S501: a safety identifier in the target region is displayed, where the safety identifier is configured to indicate that the target region is a safe region.

A location of the safety identifier is not limited in the embodiments of the present disclosure. In a possible implementation, the safety identifier may be set at a location of the guard door, or the safety identifier may be set near an illumination device, or the safety identifier may be arranged on a shelving unit, which is not limited in the embodiments of the present disclosure. For ease of viewing by the user, in a possible implementation, the safety identifier is a ground identifier.

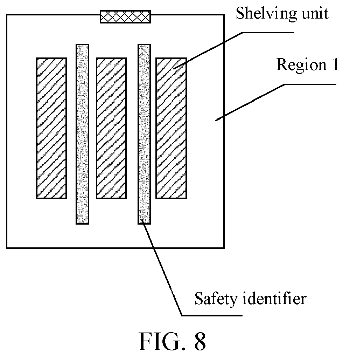

For ease of description, FIG. 8 is a schematic structural diagram of a target region according to an embodiment of the present disclosure. As shown in FIG. 8, for example, the target region being the region 1 is used as an example, the target region may include a plurality of shelving units, an aisle may exist between the shelving units, the user may move in the aisle, and the safety identifier may be set at a location of the aisle.

In a possible implementation, according to the method for controlling a warehousing system provided in this embodiment of the present disclosure, after the determining that a state of a goods-carrying tool in the target region is a non-operating state, the method further includes: sending second prompt information to the user, where the second prompt information is configured to prompt the user that the target region is a safe region.

A specific implementation of sending the second prompt information to the user is not limited in the embodiments of the present disclosure. For example, the user may be prompted that the target region is a safe region by transmitting a short message, a micro message, or an email, or pushing a message or a voice prompt to a terminal device of the user. The embodiments of the present disclosure only use this manner as an example and are not limited thereto.

The following is an apparatus embodiment of the present disclosure, which may be used to perform the method embodiments of the present disclosure. For details not disclosed in the apparatus embodiments of the present disclosure, reference may be made to the method embodiments of the present disclosure.

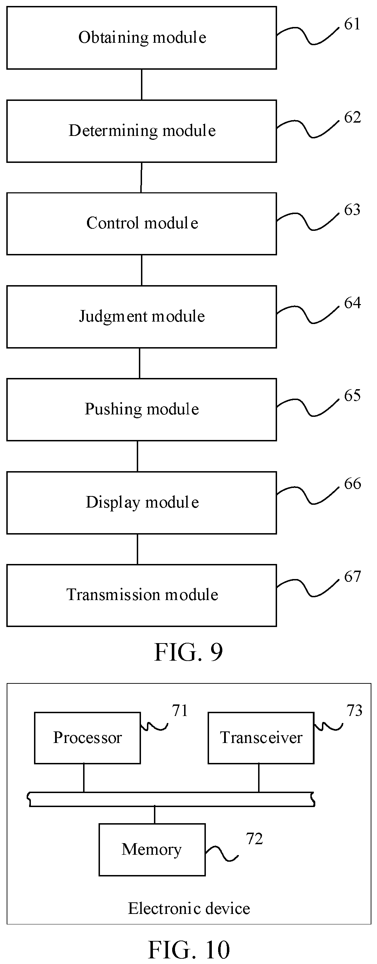

FIG. 9 is a schematic structural diagram of an apparatus for controlling a warehousing system according to an embodiment of the present disclosure. The apparatus may be implemented through software and/or hardware, and for example, may be implemented through a terminal device. As shown in FIG. 9, the apparatus for controlling a warehousing system provided in this embodiment of the present disclosure may include: an obtaining module 61, a determining module 62, and a control module 63.

The obtaining module 61 is configured to obtain a door-opening-request signal of a guard door, and determine a target region corresponding to the guard door, the target region being at least one region in a plurality of regions of the warehousing system. The determining module 62 is configured to determine that a state of a first goods-carrying tool in the target region is a non-operating stat. The control module 63 is configured to control a state of the guard door to be an open state.

In a possible implementation, according to the apparatus for controlling a warehousing system provided in this embodiment of the present disclosure, the determining module 62 is further configured to:
send an operation-stop instruction to the first goods-carrying tool, to cause the first goods-carrying tool to stop operation; and detect the state of the first goods-carrying tool, to determine that the state of the first goods-carrying tool is a non-operating state.

In a possible implementation, the apparatus for controlling a warehousing system provided in this embodiment of the present disclosure further includes:
a pushing module 65, configured to push first prompt information if the state of the first goods-carrying tool is an operating state, where the first prompt information is configured to prompt a user that the target region is a non-safe region.

In a possible implementation, the first goods-carrying tool is a robot or a forklift.

In a possible implementation, the control module 63 is specifically configured to:
start a first task of the first goods-carrying tool, and/or distribute the first task to the first goods-carrying tool, where a target shelving unit of the first task is in the target region.

The apparatus in this embodiment may execute the method embodiment shown in FIG. 2. The technical principles and technical effects thereof are similar to those of the foregoing embodiment, and details are not described herein again.

Based on the embodiment shown in FIG. 9, further, in another embodiment providing an apparatus for controlling a warehousing system of the present disclosure, the apparatus for controlling the warehousing system includes:
a judgment module 64, configured to determine whether the first goods-carrying tool exists.

The apparatus in this embodiment may execute the method embodiment shown in FIG. 3. The technical principles and technical effects thereof are similar to those of the foregoing embodiment, and details are not described herein again.

Based on the embodiment shown in FIG. 9, further, in another embodiment providing an apparatus for controlling a warehousing system of the present disclosure, the control module 63 is further configured to:
dispatch the first goods-carrying tool to another region other than the target region in the warehousing system.

In a possible implementation, the control module 63 is specifically configured to:
stop a first task of the first goods-carrying tool, a target shelving unit of the first task is in the target region, and/or control the first goods-carrying tool to execute a second task, a target shelving unit of the second task is in another region other than the target region in the warehousing system.

Based on the embodiment shown in FIG. 9, further, in another embodiment providing an apparatus for controlling a warehousing system of the present disclosure, the control module 63 is further configured to:
control to forbid a second goods-carrying tool in the warehousing system from entering the target region, where the second goods-carrying tool is a goods-carrying tool in another region other than the target region.

In a possible implementation, the control module 63 is specifically configured to:
stop a first task of the second goods-carrying tool; and/or stop distributing the first task to the second goods-carrying tool, where a target shelving unit of the first task is in the target region.

The apparatus in this embodiment may execute the method embodiment shown in FIG. 4. The technical principles and technical effects thereof are similar to those of the foregoing embodiment, and details are not described herein again.

Based on the embodiment shown in FIG. 9, further, in another embodiment providing an apparatus for controlling a warehousing system of the present disclosure, the obtaining module 61 is further configured to obtain location information of the user to determine a target region corresponding to the location information; and
the determining module 62 is specifically configured to determine that a state of a goods-carrying tool in the target region corresponding to the location information is a non-operating state.

In a possible implementation, the obtaining module 61 is specifically configured to:
detect a tag of the user, where the tag has a positioning identification function; and parse the tag to obtain the location information of the user.

The apparatus in this embodiment may execute the method embodiment shown in FIG. 5. The technical principles and technical effects thereof are similar to those of the foregoing embodiment, and details are not described herein again.

Based on the embodiment shown in FIG. 9, further, in another embodiment providing an apparatus for controlling a warehousing system of the present disclosure, the apparatus for controlling a warehousing system provided in this embodiment of the present disclosure further includes:
a display module 66, configured to display a safety identifier in the target region, where the safety identifier is configured to indicate that the target region is a safe region.

In a possible implementation, the safety identifier is a ground identifier.

In a possible implementation, the apparatus for controlling a warehousing system provided in this embodiment of the present disclosure further includes:
a transmission module 67, configured to send second prompt information to the user, where the second prompt information is configured to prompt the user that the target region is a safe region.

In a possible implementation, according to the apparatus for controlling a warehousing system provided in this embodiment of the present disclosure, the control module 63 is further configured to:
restore the state of the first goods-carrying tool to an operating state if the state of the guard door is determined as a closed state and/or no user is in the target region.

The apparatus in this embodiment may execute the method embodiment shown in FIG. 7. The technical principles and technical effects thereof are similar to those of the foregoing embodiment, and details are not described herein again.

The apparatus embodiments provided in the present disclosure are merely exemplary, the module division in FIG. 9 is merely logical function division, and there may be other division manners during actual implementation. For example, a plurality of modules may be combined or integrated into another system. Couplings between the modules may be implemented through some interfaces, the interfaces are generally electrical communication interfaces but do not exclude mechanical interfaces or interfaces in other forms. Therefore, the modules described as separate components may or may not be physically separated, that is, may be located in one place or may be distributed to the same location or different locations of different devices.

An embodiment of the present disclosure provides a warehousing system, the warehousing system includes a guard door and a goods-carrying tool, and reference may be made to the warehousing system shown in FIG. 1 or FIG. 6. The guard door may be configured to perform the method for controlling a warehousing system, and for details, reference may be made to the foregoing method embodiments. Content and effects thereof are not described herein again.

FIG. 10 is a schematic structural diagram of an electronic device according to an embodiment of the present disclosure. The electronic device may be a guard door, and as shown in FIG. 10, the electronic device includes:
a processor 71, a memory 72, a transceiver 73, and a computer program, where the transceiver 73 implements data transmission with other devices, the computer program is stored in the memory 72 and is configured to be executed by the processor 71, the computer program includes instructions used for performing the method for controlling a warehousing system, and for content and effects thereof, reference may be made to the foregoing method embodiments.

In addition, an embodiment of the present disclosure further provides a computer-readable storage medium, storing computer-executable instructions, the computer-executable instructions, when executed by at least one processor of user equipment, causing the user equipment to perform the foregoing various possible methods.

The computer-readable medium includes a computer storage medium and a communication medium, where the communication medium includes any medium that enables a computer program to be transmitted from one place to another. The storage medium may be any available medium accessible to a general-purpose or dedicated computer. For example, a storage medium is coupled to a processor, so that the processor can read information from the storage medium or write information into the storage medium. Certainly, the storage medium may be a component of the processor. The processor and the storage medium may be located in an application-specific integrated circuit (ASIC). In addition, the ASIC may be located in the user equipment. Certainly, the processor and the storage medium may be used as discrete assemblies existing in a communication device.

A person of ordinary skill in the art may understand that all or some of the steps of the method embodiments may be implemented by a program instructing relevant hardware. The program may be stored in a computer-readable storage medium. When the program is executed, steps of the foregoing method embodiments are performed. The foregoing storage medium includes: a medium such as a ROM, a RAM, a magnetic disk, or an optical disc that can store program code.

## Claims

1. A method for controlling a warehousing system, comprising:
obtaining (101) data representing a door-opening-request signal of a first guard door acquired by a face recognition device, a fingerprint recognition device, a keyword inputting device, or an opening a control button, and determining a first target region corresponding to the first guard door, the first target region being at least one region in a plurality of regions of the warehousing system, the first guard door corresponding to a plurality of target regions, the plurality of target regions have a plurality of guard doors, with the first guard door corresponding to the first target region and a second target region, and a second guard door corresponding to the first target region and the second target region; the second target region is one of the plurality of target regions,
determining (102) a state of a first goods-carrying tool in the first target region is a non-operating state, or dispatching (301) the first goods-carrying tool to another region other than the first target region in the warehousing system;
controlling (103) a state of the first guard door to be an open state;
obtaining (401) data representing location information of a user acquired by a radio frequency identification device, an ultra-wideband identification device, a two-dimensional code recognition device, or an image recognition device, and determining a target region corresponding to the location information as a second target region;
determining that (402) a state of a goods-carrying tool in the second target region corresponding to the location information is a non-operating state; and
determining the first target region as a non-target region wherein a state of a good carrying tool in said non-target region is an operating state;
wherein the second target region is different from the first target region;
wherein the obtaining (401) data representing location information of a user acquired by a radio frequency identification device, an ultra-wideband identification device, a two-dimensional code recognition device, or an image recognition device comprises:
identifying by the radio frequency identification device, the ultra-wideband identification device, the two-dimensional code recognition device, or the image recognition device a tag of the user, wherein the tag has a positioning identification function; and
parsing the tag to obtain the location information of the user.

2. The method according to claim 1, wherein the determining (102) a state of a first goods-carrying tool in the first target region is a non-operating state comprises:
sending an operation-stop instruction to the first goods-carrying tool, to cause the first goods-carrying tool to stop operation; and
detecting the state of the first goods-carrying tool, to determine that the state of the first goods-carrying tool is the non-operating state.

3. The method according to claim 2, wherein after the detecting the state of the first goods-carrying tool, the method further comprises:
pushing first prompt information when the state of the first goods-carrying tool is an operating state, wherein the first prompt information is configured to prompt a user that the first target region is a non-safe region.

4. The method according to claim 2, wherein before the determining (102) a state of a first goods-carrying tool in the first target region is a non-operating state, the method further comprises:
determining (201) whether the first goods-carrying tool exists in the first target region; and
controlling the state of the first guard door to be an open state when determining that there is no first goods-carrying tool in the first target region.

5. The method according to any one of claims 1 to 4, further comprising:
controlling (302) to forbid a second goods-carrying tool in the warehousing system from entering the first target region, wherein the second goods-carrying tool is a goods-carrying tool in another region other than the first target region.

6. The method according to claim 1, wherein
after the determining the first target region as a non-target region, the method further comprises:
controlling, according to the location information, a state of a guard door among the first guard door and the second guard door, which is farther from the user, to be a closed state, and controlling a state of the other guard door among the first guard door and the second guard door, which is closest to the user, to be an open state.

7. The method according to claim 1, wherein after the determining that a state of a first goods-carrying tool in the first target region is a non-operating state, the method further comprises:
displaying (501) a safety identifier in the first target region, wherein the safety identifier is configured to indicate that the first target region is a safe region.

8. The method according to any one of claims 1 to 4, further comprising:
restoring the state of the first goods-carrying tool to be in an operating state if the state of the first guard door is determined as a closed state and/or no user is in the first target region.

9. The method according to claim 8, wherein the restoring the state of the first goods-carrying tool to be in an operating state comprises at least one of:
starting a first task of the first goods-carrying tool, or
distributing the first task to the first goods-carrying tool, wherein a target shelving unit of the first task is in the first target region.

## Patentansprüche

1. Verfahren zum Steuern eines Lagerhaltungssystems, umfassend:
Erhalten (101) von Daten, die ein Türöffnungsanforderungssignal einer ersten Schutztür darstellen, das von einer Gesichtserkennungsvorrichtung, einer Fingerabdruckerkennungsvorrichtung, einer Schlüsselworteingabevorrichtung oder einem Öffnungssteuerknopf erfasst wird, und Bestimmen eines ersten Zielbereichs, der der ersten Schutztür entspricht, wobei der erste Zielbereich mindestens ein Bereich in einer Vielzahl von Bereichen des Lagerhaltungssystems ist, die erste Schutztür einer Vielzahl von Zielbereichen entspricht, die Vielzahl von Zielbereichen eine Vielzahl von Schutztüren aufweist, wobei die erste Schutztür dem ersten Zielbereich und einem zweiten Zielbereich entspricht, und eine zweite Schutztür dem ersten Zielbereich und dem zweiten Zielbereich entspricht; der zweite Zielbereich einer der Vielzahl von Zielbereichen ist,
Bestimmen (102), dass ein Zustand eines ersten Warentransportmittels in dem ersten Zielbereich ein Nichtbetriebszustand ist, oder Entsenden (301) des ersten Warentransportmittels zu einem anderen Bereich als dem ersten Zielbereich in dem Lagerhaltungssystem;
Steuern (103) eines Zustands der ersten Schutztür, um ein offener Zustand zu sein;
Erhalten (401) von Daten, die Standortinformation eines Benutzers darstellen, die von einer Funkfrequenzidentifikationsvorrichtung, einer Ultrabreitbandidentifikationsvorrichtung, einer zweidimensionalen Codeerkennungsvorrichtung oder einer Bilderkennungsvorrichtung erfasst wird, und Bestimmen eines Zielbereichs, der der Standortinformation entspricht, als einen zweiten Zielbereich;
Bestimmen, dass (402) ein Zustand eines Warentransportmittels in dem zweiten Zielbereich, der der Standortinformation entspricht, ein Nichtbetriebszustand ist; und
Bestimmen des ersten Zielbereichs als einen Nichtzielbereich, wobei ein Zustand eines Warentransportmittels in besagtem Nichtzielbereich ein Betriebszustand ist;
wobei der zweite Zielbereich von dem ersten Zielbereich verschieden ist;
wobei das Erhalten (401) von Daten, die Standortinformation eines Benutzers darstellen, die von einer Funkfrequenzidentifikationsvorrichtung, einer Ultrabreitbandidentifikationsvorrichtung, einer zweidimensionalen Codeerkennungsvorrichtung oder einer Bilderkennungsvorrichtung erfasst wird, umfasst:
Identifizieren durch die Funkfrequenzidentifikationsvorrichtung, die Ultrabreitbandidentifikationsvorrichtung, die zweidimensionale Codeerkennungsvorrichtung oder die Bilderkennungsvorrichtung einer Markierung des Benutzers, wobei die Markierung eine Positionsidentifikationsfunktion aufweist; und
Analysieren der Markierung, um die Standortinformation des Benutzers zu erhalten.

2. Verfahren nach Anspruch 1, wobei das Bestimmen (102), dass ein Zustand eines ersten Warentransportmittels in dem ersten Zielbereich ein Nichtbetriebszustand ist, umfasst:
Senden einer Betriebsstoppanweisung an das erste Warentransportmittel, um zu bewirken, dass das erste Warentransportmittel den Betrieb stoppt; und
Erfassen des Zustands des ersten Warentransportmittels, um zu bestimmen, dass der Zustand des ersten Warentransportmittels der Nichtbetriebszustand ist.

3. Verfahren nach Anspruch 2, wobei nach dem Erfassen des Zustands des ersten Warentransportmittels das Verfahren ferner umfasst:
Übermitteln von erster Aufforderungsinformation, wenn der Zustand des ersten Warentransportmittels ein Betriebszustand ist, wobei die erste Aufforderungsinformation konfiguriert ist, um einen Benutzer aufzufordern, dass der erste Zielbereich ein nicht sicherer Bereich ist.

4. Verfahren nach Anspruch 2, wobei vor dem Bestimmen (102), dass ein Zustand eines ersten Warentransportmittels in dem ersten Zielbereich ein Nichtbetriebszustand ist, das Verfahren ferner umfasst:
Bestimmen (201), ob das erste Warentransportmittel in dem ersten Zielbereich vorhanden ist; und Steuern des Zustands der ersten Schutztür, um ein offener Zustand zu sein, wenn bestimmt wird, dass kein erstes Warentransportmittel in dem ersten Zielbereich vorhanden ist.

5. Verfahren nach einem der Ansprüche 1 bis 4, ferner umfassend:
Steuern (302), um zu verbieten, dass ein zweites Warentransportmittel in dem Lagerhaltungssystem in den ersten Zielbereich eintritt, wobei das zweite Warentransportmittel ein Warentransportmittel in einem anderen Bereich als dem ersten Zielbereich ist.

6. Verfahren nach Anspruch 1, wobei
nach dem Bestimmen des ersten Zielbereichs als einen Nichtzielbereich das Verfahren ferner umfasst:
Steuern, gemäß der Standortinformation, eines Zustands einer Schutztür unter der ersten Schutztür und der zweiten Schutztür, die weiter von dem Benutzer entfernt ist, um ein geschlossener Zustand zu sein, und Steuern eines Zustands der anderen Schutztür unter der ersten Schutztür und der zweiten Schutztür, die dem Benutzer am nächsten ist, um ein offener Zustand zu sein.

7. Verfahren nach Anspruch 1, wobei nach dem Bestimmen, dass ein Zustand eines ersten Warentransportmittels in dem ersten Zielbereich ein Nichtbetriebszustand ist, das Verfahren ferner umfasst:
Anzeigen (501) einer Sicherheitskennung in dem ersten Zielbereich, wobei die Sicherheitskennung konfiguriert ist, um anzuzeigen, dass der erste Zielbereich ein sicherer Bereich ist.

8. Verfahren nach einem der Ansprüche 1 bis 4, ferner umfassend:
Wiederherstellen des Zustands des ersten Warentransportmittels, um in einem Betriebszustand zu sein, wenn der Zustand der ersten Schutztür als ein geschlossener Zustand bestimmt wird und/oder kein Benutzer in dem ersten Zielbereich ist.

9. Verfahren nach Anspruch 8, wobei das Wiederherstellen des Zustands des ersten Warentransportmittels, um in einem Betriebszustand zu sein, mindestens eines umfasst von:
Starten einer ersten Aufgabe des ersten Warentransportmittels, oder
Verteilen der ersten Aufgabe an das erste Warentransportmittel, wobei eine Zielregaleinheit der ersten Aufgabe in dem ersten Zielbereich ist.

## Revendications

1. Procédé de commande d'un système d'entreposage, comprenant :
l'obtention (101) de données représentant un signal de demande d'ouverture de porte d'une première porte de sécurité acquis par un dispositif de reconnaissance faciale, un dispositif de reconnaissance d'empreintes digitales, un dispositif de saisie de mots-clés, ou une ouverture d'un bouton de commande, et la détermination d'une première région cible correspondant à la première porte de sécurité, la première région cible étant au moins une région parmi une pluralité de régions du système d'entreposage, la première porte de sécurité correspondant à une pluralité de régions cibles, la pluralité de régions cibles ayant une pluralité de portes de sécurité, la première porte de sécurité correspondant à la première région cible et à une deuxième région cible, et une deuxième porte de sécurité correspondant à la première région cible et à la deuxième région cible ; la deuxième région cible étant l'une de la pluralité de régions cibles,
la détermination (102) qu'un état d'un premier outil de transport de marchandises dans la première région cible est un état de non-fonctionnement, ou l'envoi (301) du premier outil de transport de marchandises vers une autre région autre que la première région cible dans le système d'entreposage ;
la commande (103) d'un état de la première porte de sécurité pour qu'il soit un état ouvert ;
l'obtention (401) de données représentant des informations de localisation d'un utilisateur acquises par un dispositif d'identification par radiofréquence, un dispositif d'identification à bande ultra-large, un dispositif de reconnaissance de code bidimensionnel, ou un dispositif de reconnaissance d'image, et la détermination d'une région cible correspondant aux informations de localisation comme étant une deuxième région cible ;
la détermination (402) qu'un état d'un outil de transport de marchandises dans la deuxième région cible correspondant aux informations de localisation est un état de non-fonctionnement ; et
la détermination de la première région cible comme étant une région non cible dans laquelle un état d'un outil de transport de marchandises dans ladite région non cible est un état de fonctionnement
dans lequel la deuxième région cible est différente de la première région cible ;
dans lequel l'obtention (401) de données représentant des informations de localisation d'un utilisateur acquises par un dispositif d'identification par radiofréquence, un dispositif d'identification à bande ultra-large, un dispositif de reconnaissance de code bidimensionnel, ou un dispositif de reconnaissance d'image comprend :
l'identification par le dispositif d'identification par radiofréquence, le dispositif d'identification à bande ultra-large, le dispositif de reconnaissance de code bidimensionnel, ou le dispositif de reconnaissance d'image d'une étiquette de l'utilisateur, dans lequel l'étiquette a une fonction d'identification de positionnement ; et
l'analyse de l'étiquette pour obtenir les informations de localisation de l'utilisateur.

2. Procédé selon la revendication 1, dans lequel la détermination (102) qu'un état d'un premier outil de transport de marchandises dans la première région cible est un état de non-fonctionnement comprend :
l'envoi d'une instruction d'arrêt de fonctionnement au premier outil de transport de marchandises, pour amener le premier outil de transport de marchandises à arrêter son fonctionnement ; et
la détection de l'état du premier outil de transport de marchandises, pour déterminer que l'état du premier outil de transport de marchandises est l'état de non-fonctionnement.

3. Procédé selon la revendication 2, dans lequel après la détection de l'état du premier outil de transport de marchandises, le procédé comprend en outre :
la transmission de premières informations d'invite lorsque l'état du premier outil de transport de marchandises est un état de fonctionnement, dans lequel les premières informations d'invite sont configurées pour inviter un utilisateur que la première région cible est une région non sûre.

4. Procédé selon la revendication 2, dans lequel avant la détermination (102) qu'un état d'un premier outil de transport de marchandises dans la première région cible est un état de non-fonctionnement, le procédé comprend en outre :
la détermination (201) de l'existence ou non du premier outil de transport de marchandises dans la première région cible ; et
la commande de l'état de la première porte de sécurité pour qu'il soit un état ouvert lors de la détermination qu'il n'y a pas de premier outil de transport de marchandises dans la première région cible.

5. Procédé selon l'une quelconque des revendications 1 à 4, comprenant en outre :
la commande (302) pour interdire à un deuxième outil de transport de marchandises dans le système d'entreposage d'entrer dans la première région cible, dans lequel le deuxième outil de transport de marchandises est un outil de transport de marchandises dans une autre région autre que la première région cible.

6. Procédé selon la revendication 1, dans lequel
après la détermination de la première région cible comme étant une région non cible, le procédé comprend en outre :
la commande, en fonction des informations de localisation, d'un état d'une porte de sécurité parmi la première porte de sécurité et la deuxième porte de sécurité, qui est la plus éloignée de l'utilisateur, pour qu'il soit un état fermé, et la commande d'un état de l'autre porte de sécurité parmi la première porte de sécurité et la deuxième porte de sécurité, qui est la plus proche de l'utilisateur, pour qu'il soit un état ouvert.

7. Procédé selon la revendication 1, dans lequel après la détermination qu'un état d'un premier outil de transport de marchandises dans la première région cible est un état de non-fonctionnement, le procédé comprend en outre :
l'affichage (501) d'un identifiant de sécurité dans la première région cible, dans lequel l'identifiant de sécurité est configuré pour indiquer que la première région cible est une région sûre.

8. Procédé selon l'une quelconque des revendications 1 à 4, comprenant en outre :
la restauration de l'état du premier outil de transport de marchandises pour qu'il soit dans un état de fonctionnement si l'état de la première porte de sécurité est déterminé comme étant un état fermé et/ou qu'aucun utilisateur n'est dans la première région cible.

9. Procédé selon la revendication 8, dans lequel la restauration de l'état du premier outil de transport de marchandises pour qu'il soit dans un état de fonctionnement comprend au moins l'un parmi :
le démarrage d'une première tâche du premier outil de transport de marchandises, ou
la distribution de la première tâche au premier outil de transport de marchandises, dans lequel une unité de rayonnage cible de la première tâche est dans la première région cible.
